# EUROPEAN PATENT SPECIFICATION

(11) **EP 3 432 646 B1**
(45) Date of publication and mention of the grant of the patent: **28.06.2023**
(21) Application number: 17187828.3
(22) Date of filing: 24.08.2017
(51) Int. Cl.: H04W 48/02, H04W 48/12

(54) **ACCESS DEVICE, COMMUNICATION NETWORK AND COMMUNICATION METHOD**
ZUGANGSVORRICHTUNG, KOMMUNIKATIONSNETZWERK UND KOMMUNIKATIONSVERFAHREN
DISPOSITIF D'ACCÈS, RÉSEAU DE COMMUNICATION ET PROCÉDÉ DE COMMUNICATION

(30) Priority: 20.07.2017 EP 17182317
(43) Date of publication of application: 23.01.2019
(73) Proprietor: Rohde & Schwarz GmbH & Co. KG, 81671 München (DE)
(72) Inventor: Schlienz, Dr. Jürgen, 85586 Poing (DE); Merkel, Dr. Sandra, 81825 München (DE)
(74) Representative: Isarpatent

(56) References cited:
- WO-A1-2019/014354
- US-A1- 2010 272 017
- SAMSUNG: "Initial considerations on E-UTRAN connected to 5G CN", 3GPP DRAFT; R2-1705356_LTE_5GCN_V04, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275794, Retrieved from the Internet: URL:http://www.3gpp.org/ftp/Meetings_3GPP_ SYNC/RAN2/Docs/ [retrieved on 2017-05-14]
- SAMSUNG: "LTE cell barring for E-UTRAN connected to 5G CN", 3GPP DRAFT; R2-1708980_LTE_5GCN_BARRING_V03, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 17 August 2017 (2017-08-17), XP051330222, Retrieved from the Internet: URL:http://www.3gpp.org/ftp/tsg_ran/WG2_RL 2/TSGR2_99/Docs/ [retrieved on 2017-08-17]
- ERICSSON: "LTE access control when connected to 5G-CN", 3GPP DRAFT; R2-1704175 - LTE ACCESS CONTROL WHEN CONNECTED TO 5G-CN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Hangzhou; 20170515 - 20170519 14 May 2017 (2017-05-14), XP051274774, Retrieved from the Internet: URL:http://www.3gpp.org/ftp/Meetings_3GPP_ SYNC/RAN2/Docs/ [retrieved on 2017-05-14]

## Description

### TECHNICAL FIELD

The present invention relates to an access device. The present invention further relates to a communication network and a communication method.

### BACKGROUND

US 2010/272017 A1 relates to processing of advanced long-term evolution (LTE-A) system information (SI describes that in a LTE-A SI broadcast a "cellBarred" indication may be comprised for indicating "barred or "not barred".

The document "LTE access control when connected to 5G-CN" (ERICSSON) LTE ACCESS CONTROL WHEN CONNECTED TO 5G-CN, 3GPP, vol. RAN W,3GPP DRAFT; R2-1704175 - LTE ACCESS CONTROL WHEN CONNECTED TO 5G-CN, 3GPP, vol. RAN W proposes a new unified barring mechanism for NR. The proposed barring scheme defines a single set of access control categories controlled by the network that is used by a UE to perform a barring check. In particular, it is suggested that an LTE uses a new unified access class barring mechanism for new UEs that connect to 5G-CN. If the LTE node is also connected to EPC, both old and new access barring mechanism shall be supported.

The document SAMSUNG, "Initial considerations on E-UTRAN connected to 5G CN", vol. RAN WG2, no. Hangzhou, China;, 3GPP DRAFT; R2-1705356_LTE_5GCN_V04, 3RD GENERATION PARTNERSHIP PROJECT (3GPP), MOBILE COMPETENCE CENTRE ; 650, ROUTE DES LU-CIOLES ; F-06921 SOPHIA-ANTIPOLIS CEDEX ; FRANCE, raises the question whether control for E-UTRAN connected to 5G CN shall rely upon existing LTE mechanism, or rely upon a new unified access control mechanism.

Although applicable in principal to any communication system, the present invention and its underlying problem will be hereinafter described in combination with mobile communication networks, like e.g. an LTE communication network. Modern communication networks may comprise a plurality of different elements. Especially wireless networks may comprise a hierarchical architecture, where e.g. a backbone network may serve a plurality of access devices that provide access to the backbone network for mobile devices.

Such communication networks and their architectures are usually standardized, as e.g. in LTE communication networks. The underlying standards may however be provided in different or evolving revision. Usually such revisions will make sure that older equipment, at least the user equipment like e.g. smartphones, may be operated in a communication network that supports newer revisions than the equipment. It is also possible in such communication networks that e.g. two backbone networks according to different revisions of the standard are provided, like e.g. an Evolved Packet Core, EPC, and a Next Generation Core Network, NGC, or 5^{th} generation core network, 5GCN, according to the LTE standard.

In such cases it should however be made sure by the network, e.g. the access devices, that only mobile devices that support the respective backbone network couple to the respective access device. As an alternative, a simulation of the required backbone network may be provided in the present backbone network. However, such a simulation is very complex.

Against this background, the problem addressed by the present invention is providing an improved management of the access of mobile devices to a backbone network.

### A SUMMARY

The present invention therefore provides an access device, a communication network and a communication method with the features of claims 1, 5, and 6, respectively.

The present invention is based on the aim of operating access devices with different backbone networks and managing access of mobile devices to the different backbone networks according to the mobile devices capabilities.

For example, mobile devices that conform to a specific revision of a communication standard may work with a backbone network of that specific standard. A new revision of the standard may however provide a new type of backbone network. Such new backbone networks may then e.g. be operated with access devices according to the older revision of the standard, because these may e.g. be updated or the interfaces remain compatible.

However, it may be possible that mobile devices that may e.g. be in use by a plurality of users may not be updated. Such mobile devices may therefore be able to access the access devices but may not be able to communicate via the backbone network.

A mobile device may therefore think that an access device could provide it with data or voice communication services and connect to that access device. Only after establishing the connection may the mobile device notice that it is not compatible to the respective backbone network. The respective mobile device then needs to reconnect to another access device.

Therefore, the present invention makes use of two types of information that may be transmitted via broadcast messages via the wireless interface of the access device. Broadcast messages are messages that may be received by all mobile devices that are within reach of the access device. Such broadcast messages may e.g. be provided with a specific marker that qualifies them as broadcast message. As an alternative or in addition, such broadcast messages may be provided in specific broadcast packages. Such packages not necessarily need specific markers and may e.g. be characterized as broadcast packages by characteristics like their timing or position in a communication schedule or their modulation.

The first information is an information that marks an access device as barred or blocked. The first information therefore declares the access device as an access device that may not be used by the mobile devices to establish a connection to the access device.

The first information is an information that may be received and read or evaluated by all mobile devices. The first information may therefore e.g. be an information that is provided from the beginning of a respective communication standard, i.e. the first or initial release. Therefore all generations of mobile devices may read the first information.

The second information in contrast is an information that may only be read or evaluated by selected ones of the mobile devices. Such selected ones of the mobile devices may be mobile devices according to a new revision of the respective communication standard or with an increased functionality. The second information indicates to the selected ones of the mobile devices that they may access the access device. The selected ones of the mobile devices may therefore use the access device for communication e.g. with the backbone network.

With the present invention it is therefore possible to allow access to an access device only to selected mobile devices. Such mobile devices may e.g. conform to a new revision of the communication standard.

This is especially useful if the new revision of the communication standard introduces a new type of backbone network that is not compatible with mobile devices according to older revisions of the communication standard. If an access device is coupled exclusively to such a backbone network according to the new revision of the communication standard, it may implement the present invention advantageously. The mobile devices according to older revisions of the standard will be blocked from accessing the access device by the first information. In addition, mobile devices according to the new revision of the standard or with increased functionality will be allowed to access the access device and the backbone network according to the new revision of the communication standard by the second information. The second information in mobile devices according to the new revision of the standard or with increased functionality kind of overwrites or invalidates the first information.

It is understood, that any explanation above or below that refers to the LTE communication standard, may refer to the 3GPP standard release 14 or below if devices with limited capabilities are referred to. If the selected mobile devices or mobile devices with increased capabilities are referred to, the respective standard may be the 3GPP standard release 15 (as actually planned) or above. In this context the available documents regarding the 3GPP standard release 15 mainly serve as source of explanation of the used technical terms. If various publications of the above mentioned standards exist, unless stated otherwise, the initial publication of the respective standard is referenced here. Regarding the 3GPP standard release 14 the document "3GPP TS 36.306 version 14.2.0 Release 14" of 2017-04 is referenced.

Further embodiments of the present invention are subject of the further subclaims and of the following description, referring to the drawings.

In a possible embodiment, the access device may comprise a communication interface configured to communicatively couple the access device to a backbone network.

As explained above, the access device may serve to provide the mobile devices with access to a backbone network. The communication interface may therefore provide the communication link between the access device and the backbone network. The communication interface may be a wired interface, like e.g. an Ethernet-based interface, a fiber-optical interface or any proprietary interface that may couple the access device to the backbone network. The communication interface may also be a wireless interface and e.g. comprise a directional or point-to-point radio system.

In a possible embodiment, the communication interface may be configured to couple the access device to a next generation core network.

The next generation core network or NGC may be a core network as it is planned for the first release of the 3GPP specifications Release 15, including the New Radio access technology agreed during the plenary meeting of the 3GPP Technical Specifications Groups (TSG#72) in Busan, Korea.

The 3GPP standard release 15 is an evolution of the 3GPP standard release 14 and introduces the new radio access technology and a new type of core network. This core network is the so called next generation core network, NGC, also called 5G core network or 5GCN.

The communication interface may be a so called next generation or NG interface as planned for 3GPP standard release 15. The planned 3GPP standard release 15 further defines a so called "new radio" for communication between the base stations and the mobile devices.

Mobile devices, like e.g. user equipment or UEs, that conform to the 3GPP standard release 15 communication standard may work with access devices that are coupled exclusively to such a next generation core network. However, older UEs may only connect to access devices that are coupled to a core network according to former releases of the 3GPP standard, e.g. to an Evolved Packet Network according to 3GPP standard release 14.

Therefore, with the present invention backwards compatibility may be ensured such that UEs according to 3GPP standard revisions prior to release 15 detect the access device as barred. Such UEs may therefore not access the access device.

However, all UEs that are capable of reading the second information, e.g. UEs according to 3GPP standard revision 15 and higher, may read the second information and decide whether to access the access device or not. Such UEs may e.g. support the NGC or may not support the NGC. Therefore, with the second information at hand only the UEs supporting the NGC may establish a communication relationship with the access device.

In a possible embodiment, the wireless interface may be configured to perform communication with the mobile devices using orthogonal frequency-division multiple access in the downlink and single-carrier frequency-division multiple access or orthogonal frequency-division multiple access in the uplink.

So called eNobeB or eNB access devices of the LTE communication standard or 3GPP standard release 14 use orthogonal frequency-division multiple access in the downlink and single-carrier frequency-division multiple access in the uplink.

The present invention may therefore provide the access device as an eNodeB of a LTE communication system. The eNodeB may be coupled as explained above to a NGC or 5GCN. In addition or as alternative the eNodeB may also be coupled to an EPC or Evolved Packet Core.

The present invention therefore allows using eNBs to connect UEs according to 3GPP standard release 15 to a NGC or 5GCN. A network operator may therefore upgrade his infrastructure without the need to exchange or modify every single eNodeB. At the same time it is made sure that the UEs that are not compatible with the NGC or 5GCN will not try to connect to the respective eNodeBs.

The access device may use a communication system that e.g. communicates with a predetermined fixed or variable communication schedule. In such a communication schedule, specific messages or packages may be reserved for broadcast messages. Therefore, every mobile device that receives the respective messages or packages will automatically know that the content of the respective broadcast message is broadcast content.

In a possible embodiment, the broadcast messages may comprise a Master Information Block, MIB, or a System Information Block, SIB, or a minimum System Information Block, minSIB, or a SIB of a new radio communication system, nrSIB, of a LTE communication system.

As already indicated above, the LTE communication system may be a LTE communication system according to the 3GPP standard release 14 or below or according to 3GPP standard release 15 or above that is downward compatible with UEs that only support 3GPP standard release 14 or below.

The MIB and different SIBs of the 3GPP standard independently of the respective release all provide broadcast information to the mobile devices. The different releases of the 3GPP standard define specific content of the MIB and the SIBs. With increasing release number the content of the MIB or SIBs may change and the number of SIBs may increase. However, all modifications to the MIB or SIBs will usually be backward compatible. For example a new release of the standard may use formerly reserved fields to transmit additional information.

The SIB1 is one of the essential SIBs that all mobile devices or UEs require, together with the MIB, if they want to establish a communication with the access device or eNodeB. Therefore all mobile devices will read the SIB1 and the MIB. The cellBarred field is provided since the first release of the 3GPP standard and is therefore accepted by all possible mobile devices or UEs. The cellBarred field may therefore be used to indicate to all mobile devices that the respective access device, e.g. eNodeB, is barred or blocked for access by mobile devices.

The 3GPP standard release 14 is the last release of the 3GPP standard that does not include or disclose a next generation core network, NGC, or 5GCN. Therefore, mobile devices or UEs that conform to 3GPP standard release 15 may already include the capability to communicate via a next generation core network, NGC, or 5GCN. The second information therefore only needs to be provided to such mobile devices or UEs that conform to 3GPP standard release 15. Therefore, the additional information or second information may be provided in fields of the MIB or the SIB1 that are reserved for future use in the 3GPP standard release 14 and below. This ensures backward compatibility of the scheme that is proposed by the present invention.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a possible communication network with an embodiment of an access device according to the present invention;
- Fig. 2: shows a block diagram of an embodiment of a possible communication network with an embodiment of an access device according to the present invention;
- Fig. 3: shows a table of possible combinations of first information and second information according to the present invention; and
- Fig. 4: shows a flow diagram of an embodiment of a communication method according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

### DETAILED DESCRIPTION OF THE DRAWINGS

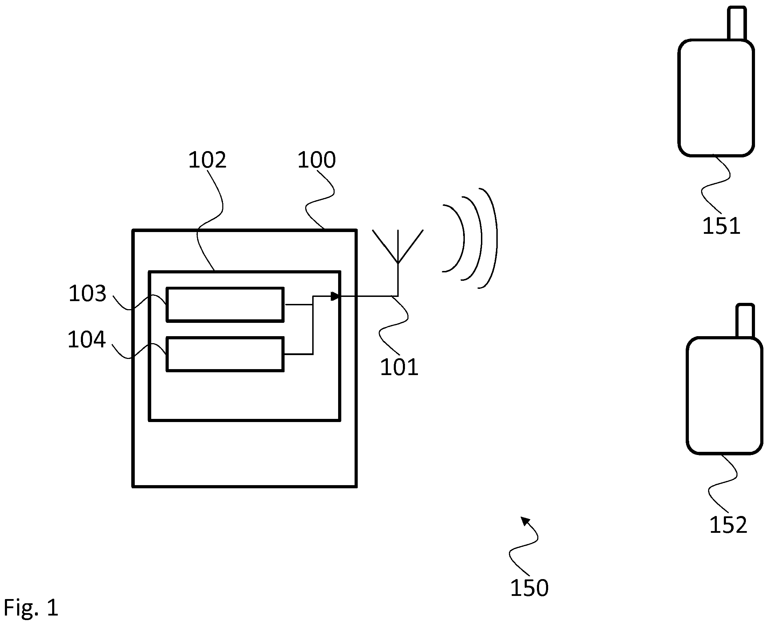

Fig. 1 shows a block diagram of a communication network 150 with an access device 100. The communication network 150 may e.g. be a LTE communication network according to the 3GPP standard release 15 as it is planned. The communication network 150 comprises an access device 100 and two mobile devices 151, 152.

In such a communication network 150 mobile devices 151, 152 may be mobile phones or other LTE or 5G enabled devices. The access device 100 may e.g. be an eNodeB of the LTE communication network. In LTE networks the eNodeBs are a kind of access point for the mobile devices 151, 152 and span cells of the cellular LTE networks. In Fig. 1 only one access device 100 is shown. It is however understood, that the communication network 150 may comprise any number of access devices 100. It is further understood, that the number of two mobile devices 151, 152 is just exemplarily chosen and that any other number of mobile devices 151, 152 is also possible.

The access device 100 comprises a communication controller 102 that is coupled to a wireless interface 101. The communication controller 102 performs the communication with the mobile devices 151, 152 via the wireless interface 101. Although not explicitly shown, it is understood that the communication controller 102 may comprise any combination of software and hardware that is necessary to perform the communication with the mobile devices 151, 152. The communication controller 102 may e.g. comprise a digital signal processor that is programmed with a software stack that implements the communication protocol of the communication network 150. Further, the communication controller 102 may comprise analog elements like e.g. A/D-converters, D/A-converters, filters, attenuators and amplifiers coupled to the digital signal processor.

The communication controller 102 may regularly broadcast information to the mobile devices 151, 152. That information may comprise any data required by the mobile devices 151, 152 to communicate with the access device 100. If the access device 100 is an eNobeB of a LTE communication network, the regular broadcasts may include the Master Information Block, MIB, and a plurality of System Information Blocks, SIBs.

A first information 103 that is broadcast by the communication controller 102 may e.g. comprise the information for the mobile devices 151, 152 that the access device 100 is barred or blocked. This first information 103 tells the mobile devices 151, 152 that they may not access the access device 100. This first information may be readable or is understood by all mobile devices 151, 152.

The communication controller 102 may further provide the mobile devices 151, 152 with a second information 104. The second information indicates that the access device 100 is accessible for selected ones of the mobile devices 151, 152 despite the first information declaring the access device 100 as barred. The difference between the first information 103 and the second information 104 is that the second information 104 may only be evaluated by selected ones of the mobile devices 151, 152. In case of a LTE network according to 3GPP standard release 15, the selected ones of the mobile devices 151, 152 may be those that support communication with a next generation core network NGC, also called a 5G core network 5GCN.

In order to provide the first information 103 to all mobile devices 151, 152, the first information 103 may e.g. be provided in a field of a broadcast message that is present in all versions of the respective communication standard. In case of a LTE network this field may be the cellBarred field in the SIB1 message.

The second information 104 may then e.g. be provided in a field that may e.g. be reserved in prior versions of the respective communication standard. For a LTE network the second information 104 may therefore be provided in a field of the MIB or the SIB1 that is reserved for future use in 3GPP standard release 14 and prior versions.

The first information 103 and the second information 104 may e.g. be provided as binary flags. If the flag is positive, e.g. "1", for the first information 103 this may indicate that the access device 100 is barred or blocked. Instead, if the flag is negative, e.g. "0", this may indicate that the access device 100 is open for all devices.

The same applies to the second information 104 that may also be provided as binary flag. If the flag is positive, e.g. "1", for the second information 104 this may indicate that the access device 100 is open for access by the selected ones of the mobile devices 151, 152, i.e. the first information 103 is overruled. However, if the flag is negative, e.g. "0", this may indicate that the access device 100 is also barred or closed for the selected ones of the mobile devices 151, 152.

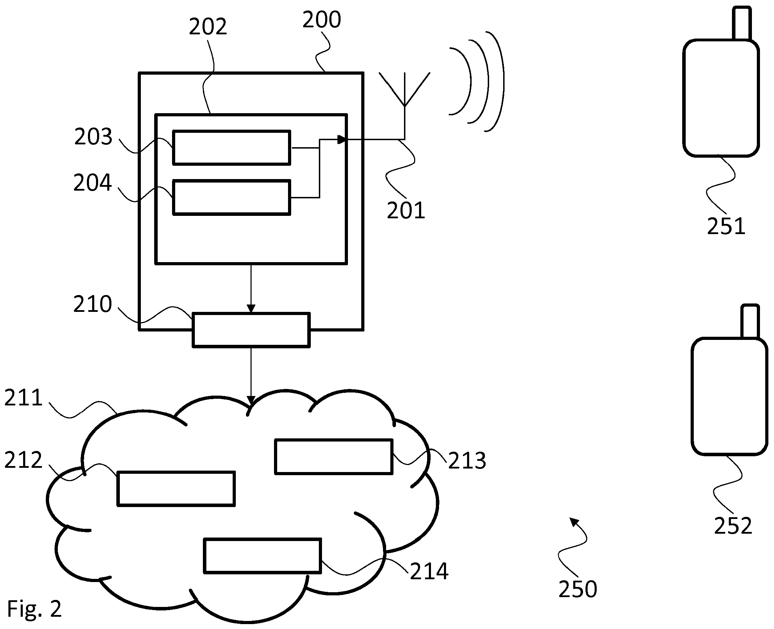

Fig. 2 shows a block diagram of a communication network 250. The communication network 250 is based on the communication network 150. The communication network 250 therefore also comprises an access device 200 that is coupled to a wireless interface 201 and two mobile devices 251, 252 that communicate with the access device 200. The access device 200 also comprises a wireless interface 201 and a communication controller 202 that broadcasts the first information 203 and the second information 204.

In addition, the access device 200 comprises a communication interface 210 that couples the access device 200 to a next generation core network 211. The next generation core network 211 comprises a user plane function UPF, an Access and Mobility Function AMF, and a Session Management Function SMF. The communication interface 210 may be a so called NG interface or Next Generation interface that is used according to the 3GPP standard release 15. As alternative, the communication interface 210 may also be a S1U/S1C interface as defined in 3GPP standard release 14.

The access device 200 therefore serves for establishing a cell of the communication network 250 and communicating the mobile devices 251, 252 in the cell with the next generation core network 211. The access device 200 therefore acts as a kind of router.

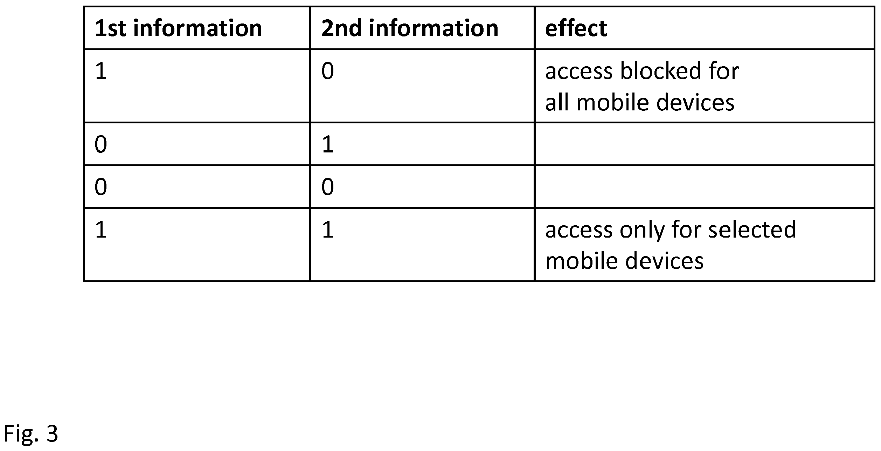

Fig. 3 shows a table of possible combinations of first information 103, 203 and second information 104, 204.

The table comprises in a first column the state or content of the first information 103, 203. In a second content the state or content of the second information 104, 204 is provided. In the third column the effect of the respective combination of first information 103, 203 and second information 104, 204 is presented.

It can be seen, that the cases that the first information 103, 203 is not set or "0" are not used by the present invention or produce no effect in the present invention. This however also means that the second information 104, 204 in this case may be used to represent other information than the accessibility of the access device 100, 200 for the selected ones of the mobile devices 151, 152, 251, 252.

However, when the first information 103, 203 is set or "1", the state of the second information 104, 204 indicates for the mobile devices 151, 152, 251, 252 if they may access the respective access device 100, 200 or not.

If the first information 103, 203 is set and the second information 104, 204 is not set or "0", the second information 104, 204 does not override the first information 103, 203 and the access device 100, 200 is blocked for all mobile devices 151, 152.

If the first information 103, 203 is set and the second information 104, 204 is also set or "1", the second information 104, 204 overrides the first information 103, 203 and the access device 100, 200 may be accessed by the selected ones of the mobile devices 151, 152.

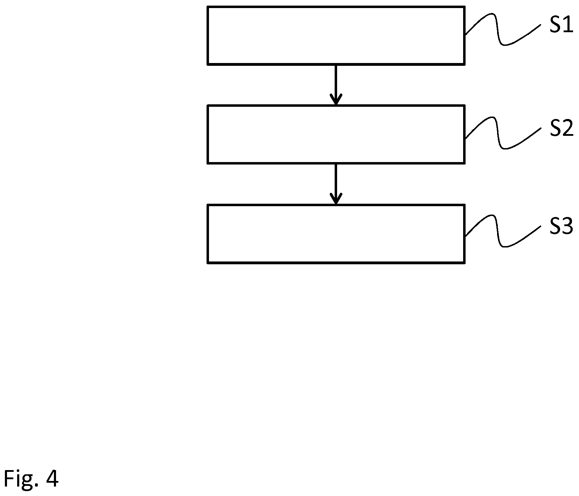

For sake of clarity, the reference signs used above in the description of apparatus based Figs. 1 - 3 will be maintained in the following description of the method based Fig. 4.

Fig. 4 shows a flow diagram of a communication method for providing wireless access to a communication network 150, 250 for mobile devices 151, 152, 251, 252 via an access device 100, 200.

The communication method comprises broadcasting S1 first information 103, 203 to the mobile devices 151, 152, 251, 252 indicating that the access device 100, 200 is barred to the mobile devices 151, 152, 251, 252. This first information 103, 203 is readable by all mobile devices 151, 152, 251, 252. The communication method further comprises broadcasting S2 second information 104, 204 to the mobile devices 151, 152, 251, 252 indicating that the access device 100, 200 is accessible for selected ones of the mobile devices 151, 152, 251, 252 to the mobile devices 151, 152, 251, 252. This second information 104, 204 is readable only by the selected ones of the mobile devices 151, 152, 251, 252. Upon request from one of the selected mobile devices 151, 152, 251, 252 the communication method may comprise establishing S3 a communication with the respective one of the selected mobile devices 151, 152, 251, 252.

The method may also comprise communicatively coupling the access device 100, 200 to a backbone network of the communication network 150, 250. This allows integrating the access device 100, 200 into a communication network 150, 250, like e.g. a LTE network with a next generation core network 211, as defined in the 3GPP standard release 15.

The communication method may comprise performing communication with the mobile devices 151, 152, 251, 252 using orthogonal frequency-division multiple access in the downlink and single-carrier frequency-division multiple access in the uplink. This communication scheme is used by eNodeB devices as defined in the 3GPP standard release 14. This embodiment therefore allows using the present invention with LTE eNodeB devices.

The first information 103, 203 and/or the second information 104, 204 may be transmitted in broadcast messages. The broadcast messages may e.g. comprise a Master Information Block, MIB, or a System Information Block, SIB, of a LTE communication system. In this case, the first information 103, 203, may be transmitted in the cellBarred field of the System Information Block 1, SIB1, of the LTE communication system.

In addition or as alternative the second information 104, 204 may be transmitted in a field of the System Information Block 1, SIB1, that is reserved for future use according to 3GPP standard release 14 or in a field of the Master Information Block, MIB, that is reserved for future use according to 3GPP standard release 14. This ensures the backwards compatibility of the communication scheme provided by the present invention.

Although explained above mainly in conjunction with LTE communication systems, it is understood, that the present invention is not limited to the application in LTE communication systems. Instead, the present invention may be used with any wireless communication system that may provide access to different backbone networks to mobile devices of different generations. This may e.g. be the case in mesh networks, especially WIFI based mesh networks.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention as defined by the appended claims. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 100, 200: access device
- 101, 201: wireless interface
- 102, 202: communication controller
- 103, 203: first information
- 104, 204: second information

- 210: communication interface
- 211: next generation core network

- 212: User Plane Function
- 213: Access and Mobility Function
- 214: Session Management Function

- 150, 250: communication network
- 151, 152, 251, 252: mobile devices

- S1, S2, S3: method steps

## Claims

1. Access device (100, 200) for providing wireless access to a communication network (150, 250) for mobile devices (151, 152, 251, 252), the access device (100, 200) is configured to be coupled to a backbone network which is only compatible with selected ones of the mobile devices, and to communicate with the selected ones of the mobile devices (151, 152, 251, 252), wherein the selected ones of the mobile devices (151, 152, 251, 252) relate to mobile devices according 3GPP standard release 15 or above and the non-selected mobile devices relate to mobile devices according 3GPP standard release 14 or below, the access device (100, 200) comprising:
a wireless interface (101, 201) configured to communicate with the mobile devices (151, 152, 251, 252), and
a communication controller (102, 202) configured to broadcast to the mobile devices (151, 152, 251, 252) first information (103, 203) indicating that the access device (100, 200) is barred and second information (104, 204) indicating that the access device (100, 200) is accessible for the selected ones of the mobile devices (151, 152, 251, 252),
wherein the first information (103, 203) is readable by all mobile devices (151, 152, 251, 252) and the second information (104, 204) is readable only by the selected ones of the mobile devices (151, 152, 251, 252),
wherein the communication controller (102, 202) is configured to transmit the first information (103, 203) in a cellBarred field of a System Information Block 1, SIB1, of an LTE communication system, and the second information (104, 204) in a field of the SIB1 that is reserved for future use according to 3GPP standard release 14 or in a field of the Master Information Block, MIB, that is reserved for future use according to 3GPP standard release 14.

2. Access device (100, 200) according to claim 1, comprising a communication interface (210) configured to communicatively couple the access device (100, 200) to the backbone network.

3. Access device (100, 200) according to claim 2, wherein the communication interface (210) is configured to couple the access device (100, 200) to the backbone network comprising a next generation core network (211).

4. Access device (100, 200) according to any one of the preceding claims, wherein the wireless interface (101, 201) is configured to perform communication with the mobile devices (151, 152, 251, 252) using orthogonal frequency-division multiple access in the downlink and single-carrier frequency-division multiple access or orthogonal frequency-division multiple access in the uplink.

5. Communication network (150, 250) for providing wireless data communication to mobile devices (151, 152, 251, 252), the communication network (150, 250) comprising:
a number of access devices (100, 200) according to any one of the preceding claims; and
the backbone network that is coupled to the access devices (100, 200) and configured to communicate with the selected mobile devices (151, 152, 251, 252) via the access devices (100, 200).

6. Communication method for providing wireless access to a communication network (150, 250) for mobile devices (151, 152, 251, 252) via an access device (100, 200), wherein the access device (100, 200) is configured to be coupled to a backbone network which is only compatible with selected ones of the mobile devices, and to communicate with the selected ones of the mobile devices (151, 152, 251, 252), wherein the selected ones of the mobile devices (151, 152, 251, 252) relate to mobile devices according 3GPP standard release 15 or above and the non-selected mobile devices relate to mobile devices according 3GPP standard release 14 or below, the communication method comprising:
broadcasting (S1) first information (103, 203) to the mobile devices (151, 152, 251, 252) indicating that the access device (100, 200) is barred to the mobile devices (151, 152, 251, 252), wherein the first information (103, 203) is readable by all mobile devices (151, 152, 251, 252),
broadcasting (S2) second information (104, 204) to the mobile devices (151, 152, 251, 252) indicating that the access device (100, 200) is accessible for the selected ones of the mobile devices (151, 152, 251, 252), wherein the second information (104, 204) is readable only by the selected ones of the mobile devices (151, 152, 251, 252), and
upon request from one of the selected mobile devices (151, 152, 251, 252) establishing (S3) communication between the respective one of the selected mobile devices (151, 152, 251, 252) and the access device (100, 200),
wherein broadcasting (S1) the first information (103, 203) comprises transmitting the first information (103, 203) in a cell Barred field of the System Information Block 1, SIB1, of the LTE communication system, and
broadcasting (S2) the second information (104, 204) comprises transmitting the second information (104, 204) in a field of the SIB1, that is reserved for future use according to 3GPP standard release 14 or in a field of the Master Information Block, MIB, that is reserved for future use according to 3GPP standard release 14.

7. Communication method according to claim 6, comprising communicatively coupling the access device (100, 200) to a backbone network of the communication network (150, 250).

8. Communication method according to claim 7, wherein communicatively coupling comprises coupling the access device (100, 200) to the backbone network comprising a next generation core network (211).

9. Communication method according to any one of the preceding claims 6 to 8, comprising performing communication with the mobile devices (151, 152, 251, 252) using orthogonal frequency-division multiple access in the downlink and single-carrier frequency-division multiple access or orthogonal frequency-division multiple access in the uplink.

## Patentansprüche

1. Zugangsvorrichtung (100, 200) zum Bereitstellen eines drahtlosen Zugangs auf ein Kommunikationsnetzwerk (150, 250) für mobile Vorrichtungen (151, 152, 251, 252), wobei die Zugangsvorrichtung (100, 200) konfiguriert ist, um mit einem Backbone-Netzwerk gekoppelt zu werden, das nur mit ausgewählten der mobilen Vorrichtungen kompatibel ist, und um mit den ausgewählten der mobilen Vorrichtungen (151, 152, 251, 252) zu kommunizieren, wobei sich die ausgewählten der mobilen Vorrichtungen (151, 152, 251, 252) auf mobile Vorrichtungen gemäß dem 3GPP Standard Release 15 oder darüber beziehen und sich die nicht ausgewählten mobilen Vorrichtungen auf mobile Vorrichtungen gemäß dem 3GPP Standard Release 14 oder darunter beziehen, die Zugangsvorrichtung (100, 200) umfassend:
eine drahtlose Schnittstelle (101, 201), die konfiguriert ist, um mit den mobilen Vorrichtungen (151, 152, 251, 252) zu kommunizieren, und
eine Kommunikationssteuerung (102, 202), die konfiguriert ist, um an die mobilen Vorrichtungen (151, 152, 251, 252) erste Informationen (103, 203), die angeben, dass die Zugangsvorrichtung (100, 200) gesperrt ist, und zweite Informationen (104, 204) zu senden, die angeben, dass die Zugangsvorrichtung (100, 200) für die ausgewählten der mobilen Vorrichtungen (151, 152, 251, 252) zugänglich ist,
wobei die ersten Informationen (103, 203) durch alle mobilen Vorrichtungen (151, 152, 251, 252) lesbar sind und die zweiten Informationen (104, 204) nur durch die ausgewählten der mobilen Vorrichtungen (151, 152, 251, 252) lesbar sind,
wobei die Kommunikationssteuerung (102, 202) konfiguriert ist, um die ersten Informationen (103, 203) in einem zellen-gesperrten Feld eines Systeminformationsblocks 1, SIB1, eines LTE-Kommunikationssystems und die zweiten Informationen (104, 204) in einem Feld des SIB1, das für eine zukünftige Verwendung gemäß dem 3GPP Standard Release 14 reserviert ist, oder in einem Feld des Master-Informationsblocks, MIB, zu übertragen, das für eine zukünftige Verwendung gemäß dem 3GPP Standard Release 14 reserviert ist.

2. Zugangsvorrichtung (100, 200) nach Anspruch 1, umfassend eine Kommunikationsschnittstelle (210), die konfiguriert ist, um die Zugangsvorrichtung (100, 200) mit dem Backbone-Netzwerk kommunikativ zu koppeln.

3. Zugangsvorrichtung (100, 200) nach Anspruch 2, wobei die Kommunikationsschnittstelle (210) konfiguriert ist, um die Zugangsvorrichtung (100, 200) mit dem Backbone-Netzwerk zu koppeln, umfassend ein Kernnetzwerk (211) der nächsten Generation.

4. Zugangsvorrichtung (100, 200) nach einem der vorstehenden Ansprüche, wobei die drahtlose Schnittstelle (101, 201) konfiguriert ist, um eine Kommunikation mit den mobilen Vorrichtungen (151, 152, 251, 252) unter Verwendung von orthogonalem Frequenzmultiplexzugang in dem Downlink und Einzelträgerfrequenzmultiplexzugang oder orthogonalem Frequenzmultiplexzugang in dem Uplink durchzuführen.

5. Kommunikationsnetzwerk (150, 250) zum Bereitstellen einer drahtlosen Datenkommunikation an mobile Vorrichtungen (151, 152, 251, 252), das Kommunikationsnetzwerk (150, 250) umfassend:
eine Anzahl von Zugangsvorrichtungen (100, 200) nach einem der vorhergehenden Ansprüche; und
das Backbone-Netzwerk, das mit den Zugangsvorrichtungen (100, 200) gekoppelt und konfiguriert ist, um mit den ausgewählten mobilen Vorrichtungen (151, 152, 251, 252) über die Zugangsvorrichtungen (100, 200) zu kommunizieren.

6. Kommunikationsverfahren zum Bereitstellen eines drahtlosen Zugangs auf ein Kommunikationsnetzwerk (150, 250) für mobile Vorrichtungen (151, 152, 251, 252) über eine Zugangsvorrichtung (100, 200), wobei die Zugangsvorrichtung (100, 200) konfiguriert ist, um mit einem Backbone-Netzwerk gekoppelt zu werden, das nur mit ausgewählten der mobilen Vorrichtungen kompatibel ist, und um mit den ausgewählten der mobilen Vorrichtungen (151, 152, 251, 252) zu kommunizieren, wobei sich die ausgewählten der mobilen Vorrichtungen (151, 152, 251, 252) auf mobile Vorrichtungen gemäß dem 3GPP Standard Release 15 oder darüber beziehen und sich die nicht ausgewählten mobilen Vorrichtungen auf mobile Vorrichtungen gemäß dem 3GPP Standard Release 14 oder darunter beziehen, das Kommunikationsverfahren umfassend:
Senden (S1) erster Informationen (103, 203) an die mobilen Vorrichtungen (151, 152, 251, 252), die angeben, dass die Zugangsvorrichtung (100, 200) zu den mobilen Vorrichtungen (151, 152, 251, 252) gesperrt ist, wobei die ersten Informationen (103, 203) durch alle mobilen Vorrichtungen (151, 152, 251, 252) lesbar sind, Senden (S2) zweiter Informationen (104, 204) an die mobilen Vorrichtungen (151, 152, 251, 252), die angeben, dass die Zugangsvorrichtung (100, 200) für die ausgewählten der mobilen Vorrichtungen (151, 152, 251, 252) zugänglich ist, wobei die zweiten Informationen (104, 204) nur durch die ausgewählten der mobilen Vorrichtungen (151, 152, 251, 252) lesbar sind, und
nach Anforderung von einer der ausgewählten mobilen Vorrichtungen (151, 152, 251, 252), Herstellen (S3) einer Kommunikation zwischen der jeweiligen einen der ausgewählten mobilen Vorrichtungen (151, 152, 251, 252) und der Zugangsvorrichtung (100, 200),
wobei das Senden (S1) der ersten Informationen (103, 203) das Übertragen der ersten Informationen (103, 203) in einem zellen-gesperrten Feld des Systeminformationsblocks 1, SIB1, des LTE-Kommunikationssystems umfasst, und
das Senden (S2) der zweiten Informationen (104, 204) das Übertragen der zweiten Informationen (104, 204) in einem Feld des SIB1 umfasst, das für eine zukünftige Verwendung gemäß dem 3GPP Standard Release 14 reserviert ist, oder in einem Feld des Master-Informationsblocks, MIB, das für eine zukünftige Verwendung gemäß dem 3GPP Standard Release 14 reserviert ist.

7. Kommunikationsverfahren nach Anspruch 6, umfassend das kommunikative Koppeln der Zugangsvorrichtung (100, 200) mit einem Backbone-Netzwerk des Kommunikationsnetzwerks (150, 250).

8. Kommunikationsverfahren nach Anspruch 7, wobei das kommunikative Koppeln das Koppeln der Zugangsvorrichtung (100, 200) mit dem Backbone-Netzwerk umfasst, umfassend ein Kernnetzwerk (211) der nächsten Generation.

9. Kommunikationsverfahren nach einem der vorstehenden Ansprüche 6 bis 8, umfassend das Durchführen einer Kommunikation mit den mobilen Vorrichtungen (151, 152, 251, 252) unter Verwendung von orthogonalem Frequenzmultiplexzugang in dem Downlink und Einzelträgerfrequenzmultiplexzugang oder orthogonalem Frequenzmultiplexzugang in dem Uplink.

## Revendications

1. Dispositif d'accès (100, 200) destiné à fournir un accès sans fil à un réseau de communication (150, 250) pour des dispositifs mobiles (151, 152, 251, 252), le dispositif d'accès (100, 200) est configuré pour être couplé à un réseau de base qui n'est compatible qu'avec des dispositifs mobiles sélectionnés, et pour communiquer avec les dispositifs mobiles sélectionnés (151, 152, 251, 252), dans lequel les dispositifs mobiles sélectionnés (151, 152, 251, 252) sont des dispositifs mobiles conformes à la version 15 ou supérieure de la norme 3GPP et les dispositifs mobiles non sélectionnés sont des dispositifs mobiles conformes à la version 14 ou inférieure de la norme 3GPP, le dispositif d'accès (100, 200) comprenant :
une interface sans fil (101, 201) configurée pour communiquer avec les dispositifs mobiles (151, 152, 251, 252), et
un contrôleur de communication (102, 202) configuré pour diffuser aux dispositifs mobiles (151, 152, 251, 252) des premières informations (103, 203) indiquant que le dispositif d'accès (100, 200) est bloqué et des secondes informations (104, 204) indiquant que le dispositif d'accès (100, 200) est accessible aux dispositifs mobiles choisis (151, 152, 251, 252),
dans lequel les premières informations (103, 203) sont lisibles par tous les dispositifs mobiles (151, 152, 251, 252) et les secondes informations (104, 204) ne peuvent être lues que par les dispositifs mobiles choisis (151, 152, 251, 252),
dans lequel le contrôleur de communication (102, 202) est configuré pour transmettre les premières informations (103, 203) dans un champ à cellules limitées d'un bloc d'informations système 1, SIB1, d'un système de communication LTE, et les secondes informations (104, 204) dans un champ du SIB1 qui est réservé pour une utilisation future conformément à la version 14 de la norme 3GPP ou dans un champ du bloc d'informations principal, MIB, qui est réservé pour une utilisation future conformément à la version 14 de la norme 3GPP.

2. Dispositif d'accès (100, 200) selon la revendication 1, comprenant une interface de communication (210) configurée pour coupler de manière communicative le dispositif d'accès (100, 200) au réseau d'infrastructure.

3. Dispositif d'accès (100, 200) selon la revendication 2, dans lequel l'interface de communication (210) est configurée pour coupler le dispositif d'accès (100, 200) au réseau d'infrastructure comprenant un réseau central de nouvelle génération (211).

4. Dispositif d'accès (100, 200) selon l'une quelconque des revendications précédentes, dans lequel l'interface sans fil (101, 201) est configurée pour communiquer avec les dispositifs mobiles (151, 152, 251, 252) à l'aide d'un accès multiple par répartition en fréquence orthogonale sur la liaison descendante et l'accès multiple par répartition en fréquence à porteuse unique ou l'accès multiple par répartition en fréquence orthogonale sur la liaison montante.

5. Réseau de communication (150, 250) destiné à fournir une communication de données sans fil à des dispositifs mobiles (151, 152, 251, 252), le réseau de communication (150, 250) comprenant :
un certain nombre de dispositifs d'accès (100, 200) selon l'une quelconque des revendications précédentes ; et
le réseau d'infrastructure qui est couplé aux dispositifs d'accès (100, 200) et configuré pour communiquer avec les dispositifs mobiles choisis (151, 152, 251, 252) par l'intermédiaire des dispositifs d'accès (100, 200).

6. Procédé de communication destiné à fournir un accès sans fil à un réseau de communication (150, 250) pour des dispositifs mobiles (151, 152, 251, 252) par l'intermédiaire d'un dispositif d'accès (100, 200), dans lequel le dispositif d'accès (100, 200) est configuré pour être couplé à un réseau d'infrastructure qui n'est compatible qu'avec des dispositifs mobiles sélectionnés, et pour communiquer avec les dispositifs mobiles sélectionnés (151, 152, 251, 252), les dispositifs mobiles sélectionnés (151, 152, 251, 252) étant des dispositifs mobiles conformes à la version 15 ou supérieure de la norme 3GPP et les dispositifs mobiles non choisis étant des dispositifs mobiles conformes à la version 14 ou inférieure de la norme 3GPF, le procédé de communication comprenant :
la diffusion (S1) de premières informations (103, 203) aux dispositifs mobiles (151, 152, 251, 252) indiquant que le dispositif d'accès (100, 200) est bloqué pour les dispositifs mobiles (151, 152, 251, 252), les premières informations (103, 203) étant lisibles par tous les dispositifs mobiles (151, 152, 251, 252), la diffusion (S2) de secondes informations (104, 204) aux dispositifs mobiles (151, 152, 251, 252) indiquant que le dispositif d'accès (100, 200) est accessible aux dispositifs mobiles choisis (151, 152, 251, 252), les secondes informations (104, 204) ne pouvant être lues que par les dispositifs mobiles choisis (151, 152, 251, 252), et
sur demande de l'un des dispositifs mobiles sélectionnés (151, 152, 251, 252), l'établissement (S3) d'une communication entre l'un des dispositifs mobiles sélectionnés (151, 152, 251, 252) et le dispositif d'accès (100, 200),
dans lequel la diffusion (S1) des premières informations (103, 203) comprend la transmission des premières informations (103, 203) dans un champ à cellules limitées du bloc d'informations système 1, SIB1, du système de communication LTE, et
la diffusion (S2) des secondes informations (104, 204) comprend la transmission des secondes informations (104, 204) dans un champ du SIB1, qui est réservé pour une utilisation future selon la version 14 de la norme 3GPP, ou dans un champ du bloc d'informations principal, MIB, qui est réservé pour une utilisation future selon la version 14 de la norme 3GPP.

7. Procédé de communication selon la revendication 6, comprenant le couplage de manière communicative du dispositif d'accès (100, 200) à un réseau d'infrastructure du réseau de communication (150, 250).

8. Procédé de Communication selon la revendication 7, dans lequel le couplage de manière communicative comprend le couplage du dispositif d'accès (100, 200) au réseau d'infrastructure comprenant un réseau central de nouvelle génération (211).

9. Procédé de communication selon l'une quelconque des revendications précédentes 6 à 8, comprenant l'établissement d'une communication avec les dispositifs mobiles (151, 152, 251, 252) à l'aide d'un accès multiple par répartition en fréquence orthogonale sur la liaison descendante et d'un accès multiple par répartition en fréquence à porteuse unique ou d'un accès multiple par répartition en fréquence orthogonale sur la liaison montante.
